# EUROPÄISCHE PATENTSCHRIFT

(11) **EP 0 557 681 B1**
(45) Veröffentlichungstag und Bekanntmachung des Hinweises auf die Patenterteilung: **17.07.1996**
(21) Anmeldenummer: 93100026.9
(22) Anmeldetag: 04.01.1993
(51) Int. Cl.: G05B 19/042, H04Q 3/545, G06F 9/44

(54) **Verfahren und Anordnung zum Auswählen von Parametern in einer programmgesteuerten Steuereinheit**
Method and device to select parameters in a program controlled control unit
Procédé et dispositif pour la sélection des paramètres dans un organe de commande commandé par programme

(30) Priorität: 25.02.1992 DE 4205731
(43) Veröffentlichungstag der Anmeldung: 01.09.1993
(73) Patentinhaber: SIEMENS AKTIENGESELLSCHAFT, 80333 München (DE)
(72) Erfinder: Gerst, Martin, Dipl.-Ing., W-5840 Schwerte-Westhofen (DE); Karnatz, Hans-Jürgen, W-4750 Unna (DE)

(56) Entgegenhaltungen:
- EP-A- 0 032 558
- PATENT ABSTRACTS OF JAPAN vol. 011, no. 212 (E-522)9. Juli 1987 & JP-A-62 034 448(NEC ENG LTD) 14.Februar 1987

## Beschreibung

Die Erfindung bezieht sich auf ein Verfahren und Anordnung zum Auswählen von Parametern in einer programmgesteuerten Steuereinheit, insbesondere einer Kommunikationsanlage, wie beispielsweise einer Vermittlungsanlage für den Fernsprechverkehr und/oder den Datenverkehr.

Moderne programmgesteuerte Kommunikationsanlagen enthalten üblicherweise eine Steuereinheit, die mit einem Rechnersystem versehen ist. Das Rechnersystem weist normalerweise einen oder mehrere Prozessoren und eine oder mehrere Speichereinheiten auf. Die Speichereinheit enthält üblicherweise mindestens einen Programmspeicher, in dem das Betriebsprogramm und die Systemdatenbasis untergebracht sind. In dieser Systemdatenbasis sind u.a. sogenannte Standarddaten gespeichert. Diese Standarddaten sind einerseits ASCII-Zeichenfolgen, die an einem Fernsprechgerät anzeigbar sind. Eine derartige Zeichenfolge ist beispielsweise der Text: "Bitte um Rückruf". Andererseits sind die Standarddaten länderabhängige Daten, wie z.B. Dämpfungspläne, Pegeleinstellungen, Baugruppeneinstelldaten und/oder Gebührendaten. Weiterhin enthält die Speichereinheit üblicherweise mindestens einen Datenspeicher, in dem u.a. die einer spezifischen Kommunikationsanlage zugeordneten Kundendaten, wie beispielsweise Rufnummern oder diesen zugeordnete mögliche Leistungsmerkmale gespeichert sind. Der Datenspeicher kann auch als Arbeitsspeicher dienen. Der Programmspeicher ist üblicherweise als PROM ausgebildet, während der Datenspeicher als RAM ausgebildet sein kann.

Falls eine derartige Vermittlungsanlage für einen Einsatz in verschiedenen Ländern vorgesehen ist, ist es denkbar, für jedes Land und/oder jede Sprache einen eigenen Satz PROM's vorzusehen, der dann im Bedarfsfall eingebaut wird. Dies hat zur Folge, daß für jedes Land und/oder jede Sprache eine eigene Softwareproduktion erforderlich ist. Für jedes funktionelle Leistungsmerkmal ist somit ein Satz verschiedener Produktionen erforderlich. Dies zieht eine umfangreiche und damit teuere Lagerhaltung für die verschiedenen länderspezifischen Konfigurationen nach sich.

Aus der EP-A-0 032 558 ist eine Steuereinheit zur Steuerung und/oder Regelung von Maschinen bekannt, die einen Prozessor und eine Speichereinheit mit einem Datenspeicher und einem Programmspeicher enthält. Der Datenspeicher ist in einzelne Abschnitte unterteilbar, welche verschiedene Parameter enthalten. Die Steuereinheit weist auch einen Auswahlschalter auf, welcher zur Ansteuerung der einzelnen Abschnitte des Datenspeichers dient.

Aus Patent Abstracts of Japan, Vol. 011, No. 212 (E-522), 9. Juli 1987, JP-A-62 034 448 ist weiterhin eine Darstellung von Steuerdaten an einer Anzeigeeinheit bekannt. Die Darstellung der Steuerdaten erfolgt in unterschiedlichen Sprachen, die in einem Sprachspeicher gespeichert sind.

Der Erfindung liegt die Aufgabe zugrunde, ein Verfahren und eine Anordnung anzugeben, bei deren Verwendung eine programmgesteuerte Steuereinheit sehr einfach und schnell auf die Erfordernisse verschiedener Länder und/oder Sprachen einstellbar ist, ohne unterschiedliche Produktionen einsetzen zu müssen.

Erfindungsgemäß wird die Aufgabe bei dem Verfahren und der Anordnung der eingangs genannten Art durch die in den Patentansprüchen 1 bzw. 7 angegebenen Merkmale gelöst.

In der programmgesteuerten Steuereinheit, die ein Rechnersystem mit einem Prozessor und mit einer Speichereinheit enthält, ist in der Speichereinheit eine Schalteinheit vorgesehen, die aufgrund von in einem Hauptverzeichnis der Speichereinheit gespeicherten Indices Schaltstufen auswählt. Die Schaltstufen enthalten Schalter, mit denen den gewünschten Parametern entsprechende Einträge auswählbar sind, die den Adressen der Parameter in der Systemdatenbasis zugeordnet sind.

Das Verfahren und die Anordnung haben den Vorteil, daß auf einfache Weise verschiedene Betriebsarten der Steuereinheit einstellbar sind. Falls als Parameter länder- und/oder sprachspezifische Merkmale bzw. Daten vorgesehen sind, kann bei einer Verwendung des Verfahrens und der Anordnung in einer Kommunikationsanlage diese sehr schnell auf die Erfordernisse verschiedener Länder und/oder Sprachen eingestellt werden. Außerdem wird durch die Erfindung eine geringe Lagerhaltung an unterschiedlichen Bauteilen der Steuereinheiten für verschiedene Anwendungen ermöglicht, was eine Senkung der Kosten zur Folge hat. Eine vorteilhafte Ausführungsform der Erfindung ergibt sich, wenn die Schalter als manuell betätigbare Schalter, insbesondere als Schiebeschalter ausgebildet sind. In diesem Fall kann die Auswahl einer bestimmten Betriebsart durch manuellen Eingriff erfolgen. Es ist auch möglich, die Einstellung elektronisch, insbesondere programmgesteuert vorzunehmen.

Zweckmäßigerweise sind den Schaltern in den Schalteinheiten Speichereinheiten zugeordnet, in denen den Adressen der Parameter zugeordnete Einträge gespeichert sind.

Die Parameter können als Teil der Systemdatenbasis vorteilhafterweise in dem als PROM ausgebildeten Programmspeicher gespeichert sein.

Das Verfahren und ein Ausführungsbeispiel einer Anordnung zur Durchführung des Verfahrens werden im folgenden anhand von Zeichnungen näher erläutert. Es zeigen:
- Figur 1: ein Blockschaltbild einer mit einer programmgesteuerten Steuereinheit versehenen Kommunikationsanlage,
- Figur 2: ein Blockschaltbild der Steuereinheit und
- Figur 3: eine schematische Darstellung von Speicherinhalten und einer Schalteinheit.

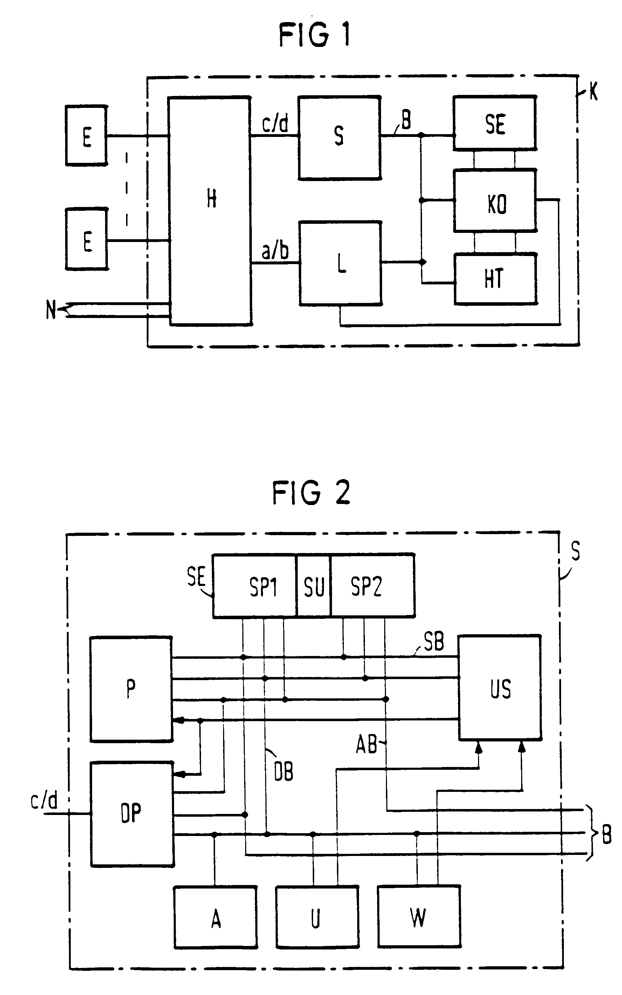

Die in Figur 1 dargestellte Kommunikationsanlage K enthält eine programmgesteuerte Steuereinheit S mit einem digitalen Rechnersystem. Die Steuereinheit S steuert und überwacht über Busse B die einzelnen Einheiten der Kommunikationsanlage K. Solche Einheiten sind ein Hauptverteiler H, der als Schnittstelleneinrichtung zu angeschlossenen Endgeräten E und zu Netzen N dient und eine Leitungseinheit L, die unterschiedliche Signalisierungsinformationen von den Endgeräten E oder den Netzen N auf ein innerhalb der Kommunikationsanlage K einheitliches Format umwandeln. Weitere Einheiten sind ein Hörtonerzeuger HT und ein MFV-Sender SE. Der Hörtonerzeuger HT erzeugt Hörtöne unterschiedlicher Frequenz und der MFV-Sender SE erzeugt die erforderlichen Signale bei einer Mehrfrequenzwahl in einem entsprechenden Netz N. Eine weitere wesentliche Einheit ist ein Koppelnetz KO, das die Verbindungen zwischen den Endgeräten E untereinander oder zwischen den Endgeräten E und den Netzen N durchschaltet. Das Koppelnetz KO besteht aus mehreren sogenannten Koppelvielfachen in Form von matrixartig angeordneten Zeilen- und Spaltenleitungen, wobei die Kreuzungspunkte als ein- und ausschaltbare Verbindungselemente ausgebildet sind.

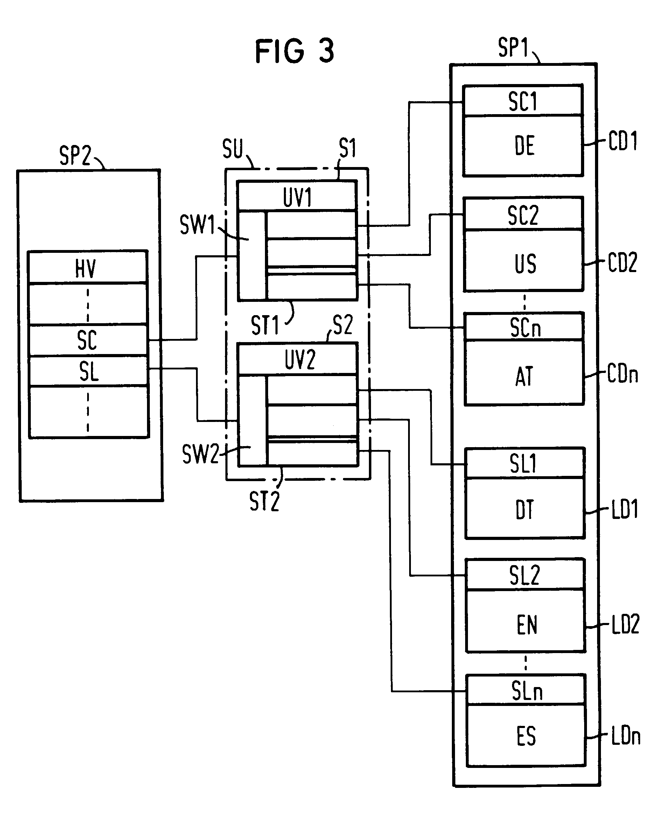

Die in Figur 2 dargestellte Steuereinheit S enthält einen als Systemprozessor dienenden Prozessor P und eine als Systemspeicher dienende Speichereinheit SE. Der Prozessor P und die Speichereinheit SE sind miteinander über einen Datenbus DB, einen Adressenbus AB und einen Steuerbus SB verbunden. Die Speichereinheit SE enthält Halbleiterbausteine unterschiedlichen Speichertyps. Ein erster Speicher SP1, vorzugsweise ein Nur-Lesespeiche, PROM, beinhaltet das Betriebsprogramm sowie die Systemdatenbasis und ein zweiter Speicher SP2, vorzugsweise ein Schreib/Lesespeicher, RAM, dient als Speicher für Kundendaten und als Arbeitsspeicher. Die Systemdatenbasis enthält auch sogenannte Standarddaten. Diese sind einerseits ASCII-Zeichen, die beispielsweise zur Information eines Teilnehmers an einem Fernsprechgerät angezeigt werden und andererseits länderspezifische Daten, wie z.B. Dämpfungspläne, Pegeleinstellungen, Baugruppeneinstellungen und/oder Gebührendaten. Zwischen dem PROM und dem RAM ist eine Schalteinheit SU vorgesehen, deren Funktion weiter unten im Zusammenhang mit Figur 3 beschrieben wird.

Die Steuereinheit S enthält auch einen Datenprozessor DP, der mit dem Hauptverteiler H verbunden ist und der die Funktion eines Modems hat. Weiterhin enthält sie eine Unterbrechungssteuerung US für den Prozessor P und den Datenprozessor DP und mehrere Überwachungseinheiten, wie z.B. eine Uhr U, sowie eine Anzeigeeinheit A und einen Watchdog W. Diese Einheiten sind über den Datenbus DB, den Adressenbus und/oder den Steuerbus SB mit dem Prozessor P verbunden.

Die in Figur 3 schematisch dargestellten Speicherinhalte zeigen ein im Speicher SP2 gespeichertes Hauptverzeichnis HV, das Strukturverzeichnisse von zugehörigen Daten enthält. Ein erstes Strukturverzeichnis SC enthält einen Index, der auf die einer länderspezifischen Konfiguration zugeordneten Parameter der im Speicher SP1 gespeicherten Systemdatenbasis verweist. Ein weiteres Strukturverzeichnis SL enthält einen Index, der auf die einer gewünschten Sprache zugeordneten Parameter verweist. Diese Indizes adressieren unter Verwendung von mit jeweils einem Speicher ST1 bzw. ST2 und Schaltern SW1 bzw. SW2 versehenen Schaltstufen S1 und S2 die Parameter. Die Schalter SW1 und SW2 sind beispielsweise als Schiebeschalter oder als ein Satz von Kippschaltern ausgebildet und manuell betätigbar. Sie können jedoch auch elektronisch, z.B. programmgesteuert einstellbar und/oder abfragbar ausgebildet sein. Der Speicher ST1 enthält ein Unterverzeichnis UV1 mit Adressen von Datenstrukturen SC1 bis SCn von Konfigurationsdaten CD1 bis CDn für verschiedene Länder, z.B. Deutschland DE, USA US und Österreich AT. In entsprechender Weise enthält der Speicher ST2 ein Unterverzeichnis UV2 mit Adressen von Datenstrukturen SL1 bis SLn von Sprachdaten LD1 bzw. LDn für verschiedene Sprachen, z.B. Deutsch DT, Englisch EN und Italienisch IT.

Falls eine Kommunikationsanlage K für ein bestimmtes Land eingesetzt werden soll, beispielsweise USA und im Speicher SP2 die zugehörige Konfiguration aufgerufen wird, verweist das Hauptverzeichnis HV auf das Unterverzeichnis UV1. Dort wurden die Schalter SW1 derart eingestellt, daß das Strukturverzeichnis SC2 ausgewählt wird, bei dem die zugehörigen Daten CD2 die länderspezifischen Konfigurationsdaten enthalten. Entsprechend den Konfigurationsdaten CD werden auch sprachspezifische Daten SD aus dem Speicher SP1 ausgelesen. Es wird angenommen, daß die englischen Sprachdaten EN benutzt werden sollen. Das Hauptverzeichnis HV verweist dann auf das Unterverzeichnis UV2 in der Schaltstufe S2. Dort wurden die Schalter SW2 derart eingestellt, daß mittels dem in der ausgewählten Stelle gespeicherten Inhalt des Speichers ST2 das Strukturverzeichnis SL2 ausgewählt wird, das den sprachspezifischen Daten SD2 für die englische Sprache EN zugeordnet ist.

Falls die Kommunikationsanlage K für ein anderes Land abgeändert werden soll, können lediglich durch eine Änderung der Einstellungen der Schalteinheit SU die entsprechende neue Konfiguration und eine zugehörige Sprache ausgewählt werden.

## Patentansprüche

1. Verfahren zum Auswählen von Parametern in einer programmgesteuerten Steuereinheit (S), die ein Rechnersystem mit einem Prozessor (P) und mit einer Speichereinheit (SE) enthält, wobei die Speichereinheit (SE) einen eine Systemdatenbasis und ein Betriebsprogramm enthaltenden Programmspeicher (SP1) und einen Datenspeicher (SP2) aufweist, und wobei unter Verwendung von voreingestellten Schaltern (SW1, SW2) einer Schalteinheit (SU) die entsprechenden Parameter (CD, LD) aus der Systemdatenbasis des Programmspeichers (SP1) ausgelesen werden,
**gekennzeichnet** durch die folgenden Schritte:
a) in einem Hauptverzeichnis (HV) im Datenspeicher (SP2) der Speichereinheit (SE) gespeicherte Indices (SC, SL) verweisen auf die Schalteinheit (SU),
b) in der Schalteinheit (SU) werden mittels der voreingestellten Schalter (SW1, SW2) und der Indices (SC, SL) den Parametern (CD, LD) zugeordnete, in Unterverzeichnissen (UV1, UV2) gespeicherte Einträge ausgewählt und
c) mittels der Einträge in den Unterverzeichnissen (UV1, UV2) werden die entsprechenden Parameter (CD, LD) aus der Systemdatenbasis des Programmspeichers (SP1) ausgelesen.

2. Verfahren nach Anspruch 1, **dadurch gekennzeichnet**, daß die Schalter (SW1, SW2) manuell einstellbar sind.

3. Verfahren nach Anspruch 1, **dadurch gekennzeichnet**, daß die Schalter (SW1, SW2) elektronisch einstellbar sind.

4. Verfahren nach Anspruch 3, **dadurch gekennzeichnet**, daß die Stellungen der Schalter (SW1, SW2) programmgesteuert einstellbar und/oder abfragbar sind.

5. Verfahren nach einem der Ansprüche 1 bis 4, **dadurch gekennzeichnet**, daß die Einträge in den Schaltern (SW1, SW2) zugeordneten Speichern (ST1, ST2) gespeichert sind.

6. Verfahren nach einem der Ansprüche 1 bis 5, **dadurch gekennzeichnet**, daß als Parameter länderspezifische Konfigurationsdaten (CD) und sprachspezifische Daten (LD) für eine Kommunikationsanlage (K) vorgesehen sind.

7. Anordnung zum Auswählen von Parametern in einer programmgesteuerten Steuereinheit (S), die ein Rechnersystem mit einem Prozessor (P) und mit einer Speichereinheit (SE) enthält, wobei die Speichereinheit (SE) einen eine Systemdatenbasis und ein Betriebsprogramm enthaltenden Programmspeicher (SP1) und einen Datenspeicher (SP2) aufweist, und wobei eine mit dem Programmspeicher (SP1) und dem Datenspeicher (SP2) verbundene Schalteinheit (SU) vorgesehen ist, die unter Verwendung von voreingestellten Schaltern (SW1, SW2) die entsprechenden Parameter (CD, LD) aus der Systemdatenbasis des Programmspeichers (SP1) ausliest,
**dadurch gekennzeichnet**,
daß der Datenspeicher (SP1) ein Hauptverzeichnis (HV) enthält, in dem Indices (SC, SL) gespeichert sind, die auf die Schalteinheit (SU) verweisen, daß die Schalteinheit (SU) Unterverzeichnisse (UV1, UV2) enthält, in denen Einträge gespeichert sind, die mittels der voreingestellten Schalter (SW1, SW2) und der Indices (SC, SL) im Hauptverzeichnis (HV) ausgewählt werden und mittels denen die entsprechenden Parameter (CD, LD) aus der Systemdatenbasis des Programmspeichers (SP1) auslesbar sind.

8. Anordnung nach Anspruch 7, **dadurch gekennzeichnet**, daß die Schaltstufen (S1, S2) den Schaltern (SW1, SW2) zugeorcnete Speicher (ST1, ST2) enthalten, in denen die Einträge als Unterverzeichnisse (UV1, UV2) gespeichert sind.

9. Anordnung nach Anspruch 7 oder 8, **dadurch gekennzeichnet**, daß das Hauptverzeichnis (HV) im Datenspeicher (SP2) gespeichert ist.

10. Anordnung nach einem der Ansprüche 7 bis 9, **dadurch gekennzeichnet**, daß als Schalter (SW1, SW2) manuelle einstellbare Schalter vorgesehen sind.

11. Anordnung nach Anspruch 10, **dadurch gekennzeichnet**, daß als Schalter (SW1, SW2) Kippschalter vorgesehen sind.

12. Anordnung nach einem der Ansprüche 7 bis 9, **dadurch gekennzeichnet**, daß als Schalter (SW1, SW2) elektronisch einstellbare Schalter vorgesehen sind.

13. Anordnung nach Anspruch 12, **dadurch gekennzeichnet**, daß als Schalter (SW1, SW2) programmgesteuert einstellbare und/oder abfragbare Schalter vorgesehen sind.

14. Anordnung nach einem der Ansprüche 7 bis 13, **dadurch gekennzeichnet**, daß die Speichereinheit (SE) mit der Schalteinheit (SU) Bestandteile einer Kommunikationsanlage (K) sind.

## Claims

1. Method of selecting parameters in a program-controlled control unit (S), which includes a computer system with a processor (P) and with a memory unit (SE), the memory unit (SE) having a program memory (SP1), containing a system database and an operating program, and a data memory (SP2), and, using preset switches (SW1, SW2) of a switching unit (SU), the corresponding parameters (CD, LD) are read out from the system database of the program memory (SP1),
characterized by the following steps:
a) indices (SC, SL) stored in a main directory (HV) in the data memory (SP2) of the memory unit (SE) refer to the switching unit (SU),
b) in the switching unit (SU), entries assigned to the parameters (CD, LD) and stored in subdirectories (UV1, UV2) are selected by means of the preset switches (SW1, SW2) and the indices (SC, SL), and
c) by means of the entries in the subdirectories (UV1, UV2), the corresponding parameters (CD, LD) are read out from the system database of the program memory (SP1).

2. Method according to Claim 1, characterized in that the switches (SW1, SW2) can be set manually.

3. Method according to Claim 1, characterized in that the switches (SW1, SW2) can be set electronically.

4. Method according to Claim 3, characterized in that the positions of the switches (SW1, SW2) can be set and/or can be interrogated under program control.

5. Method according to one of Claims 1 to 4, characterized in that the entries are stored in memories (ST1, ST2) assigned to the switches (SW1, SW2).

6. Method according to one of Claims 1 to 5, characterized in that country-specific configuration data (CD) and language-specific data (LD) for a communications system (K) are provided as parameters.

7. Arrangement for selecting parameters in a program-controlled control unit (S), which includes a computer system with a processor (P) and with a memory unit (SE), the memory unit (SE) having a program memory (SP1), containing a system database and an operating program, and a data memory (SP2), and there being provided a switching unit (SU) which is connected to the program memory (SP1) and to the data memory (SP2) and, using preset switches (SW1, SW2), reads out the corresponding parameters (CD, LD) from the system database of the program memory (SP1), characterized in that the data memory (SP1) contains a main directory (HV) in which there are stored indices (SC, SL) which refer to the switching unit (SU), in that the switching unit (SU) contains subdirectories (UV1, UV2) in which there are stored entries which are selected by means of the preset switches (SW1, SW2) and the indices (SC, SL) in the main directory (HV) and by means of which the corresponding parameters (CD, LD) can be read out from the system database of the program memory (SP1).

8. Arrangement according to Claim 7, characterized in that the switching stages (S1, S2) include memories (ST1, ST2) which are assigned to the switches (SW1, SW2) and in which the entries are stored as subdirectories (UV1, UV2).

9. Arrangement according to Claim 7 or 8, characterized in that the main directory (HV) is stored in the data memory (SP2).

10. Arrangement according to one of Claims 7 to 9, characterized in that switches which can be set manually are provided as switches (SW1, SW2).

11. Arrangement according to Claim 10, characterized in that toggle switches are provided as switches (SW1, SW2).

12. Arrangement according to one of Claims 7 to 9, characterized in that switches which can be set electronically are provided as switches (SW1, SW2).

13. Arrangement according to Claim 12, characterized in that switches which can be set and/or interrogated under program control are provided as switches (SW1, SW2).

14. Arrangement according to one of Claims 7 to 13, characterized in that the memory unit (SE) with the switching unit (SU) are component parts of a communications system (K).

## Revendications

1. Procédé de sélection de paramètres dans une unité (S) de commande commandée par programme, qui comprend un système informatique comportant un processeur (P) et comportant une unité (SE) de mémoire, l'unité (SE) de mémoire comportant une mémoire (SP1) de programme, qui comprend une base de données de système et un programme d'exploitation, et une mémoire (SP2) de données, et dans lequel on lit les paramètres appropriés (CD, LD) dans la base de données de système de la mémoire (SP1) de programme en utilisant des interrupteurs (SW1, SW2) réglés au préalable d'une unité (SU) d'interrupteurs,
caractérisé par les étapes suivantes :
a) des index (SC, SL) mémorisés dans un répertoire principal (HV) de la mémoire (SP2) de données de l'unité (SE) de mémoire renvoient à l'unité (SU) d'interrupteur,
b) on sélectionne dans l'unité (SU) d'interrupteur, au moyen des interrupteurs (SW1, SW2) réglés au préalable et des index (SC, SL), des enregistrements associés aux paramètres (CD, LD) et mémorisés dans des sous-répertoires (UV1, UV2), et
c) on lit, au moyen des enregistrements dans les sous-répertoires (UV1, UV2) les paramètres appropriés (CD, LD) dans la base de données de système de la mémoire (SP1) de programme.

2. Procédé suivant la revendication 1, caractérisé en ce que l'on peut régler les interrupteurs (SW1, SW2) manuellement.

3. Procédé suivant la revendication 1, caractérisé en ce que l'on peut régler les interrupteurs (SW1, SW2) électroniquement.

4. Procédé suivant la revendication 3, caractérisé en ce que l'on peut régler et/ou interroger de manière commandée par programme les positions des interrupteurs (SW1, SW2).

5. Procédé suivant l'une des revendications 1 à 4, caractérisé en ce que les enregistrements sont mémorisés dans des mémoires (ST1, ST2) associées aux interrupteurs (SW1, SW2).

6. Procédé suivant l'une des revendications 1 à 5, caractérisé en ce qu'il est prévu comme paramètres des données (CD) de configuration spécifiques à des pays et des données (LD) spécifiques à des langues pour une installation (K) de communication.

7. Dispositif de sélection de paramètres dans une unité (S) de commande commandée par programme, qui comprend un système informatique, qui comporte un processeur (P) et une unité (SE) de mémoire, l'unité (SE) de mémoire comportant une mémoire (SP1) de programme, laquelle comprend une base de données de système et un programme d'exploitation, et une mémoire (SP2) de données, une unité (SU) d'interrupteur, qui est reliée à la mémoire (SP1) de programme et à la mémoire (SP2) de données et qui lit les paramètres appropriés (CD, LD) dans la base de données de système de la mémoire (SP1) de programme en utilisant des interrupteurs (SW1, SW2) réglés au préalable, étant prévue,
caractérisé ce que
la mémoire (SP1) de données comprend un répertoire principal (HV), dans lequel sont mémorisés des index (SC, SL) renvoyant à l'unité (SU) d'interrupteurs, l'unité (SU) de mémoire comprend des sous-répertoires (UV1, UV2), dans lesquels sont mémorisés des enregistrements, qui sont sélectionnés au moyen des interrupteurs (SW1, SW2) réglés au préalable et des index (SC, SL) dans le répertoire principal (HV) et au moyen desquels les paramètres appropriés (CD, LD) peuvent être lus dans la base de données de système de la mémoire (SP1) de programme.

8. Dispositif suivant la revendication 7, caractérisé en ce que les étages (S1, S2) d'interrupteurs comprennent des mémoires (ST1, ST2), qui sont associées aux interrupteurs (SW1, SW2) et dans lesquelles les enregistrements sont mémorisés en tant que sous-répertoires (UV1, UV2).

9. Dispositif suivant la revendication 7 ou 8, caractérisé en ce que le répertoire principal (HV) est mémorisé dans la mémoire (SP2) de données.

10. Dispositif suivant l'une des revendications 7 à 9, caractérisé en ce qu'il est prévu comme interrupteurs (SW1, SW2) des interrupteurs pouvant être réglés manuellement.

11. Dispositif suivant la revendication 10, caractérisé en ce qu'il est prévu comme interrupteurs (SW1, SW2) des interrupteurs à bascule.

12. Dispositif suivant l'une des revendications 7 à 9, caractérisé en ce qu'il est prévu comme interrupteurs (SW1, SW2) des interrupteurs pouvant être réglés électroniquement.

13. Dispositif suivant la revendication 12, caractérisé en ce qu'il est prévu comme interrupteurs (SW1, SW2) des interrupteurs pouvant être réglés et/ou être interrogés d'une manière commandée par programme.

14. Dispositif suivant l'une des revendications 7 à 13, caractérisé en ce que l'unité (SE) de mémoire et l'unité (SU) d'interrupteur font partie d'une installation (K) de communication.
